(19) Europäisches Patentamt
European Patent Office
Office européen des brevets

(11) **EP 2 108 979 A2**

(12) **EUROPEAN PATENT APPLICATION**

(43) Date of publication:
**14.10.2009 Bulletin 2009/42**

(51) Int Cl.:
***G01T 7/00*** (2006.01)

(21) Application number: **09157807.0**

(22) Date of filing: **10.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **10.04.2008 IT RM20080191**

(71) Applicants:
• **Enea-Ente Per Le Nuove Tecnologie, L'Energia e L'Ambiente**
**00196 Rome (IT)**
• **RTS Instruments S.r.l.**
**00132 Rome (IT)**
• **Octo Telematics S.p.A.**
**42100 Reggio Emilia (RE) (IT)**

(72) Inventors:
• **Scafè, Raffaele**
**00061, Anguillara Sabazia (RM) (IT)**

• **Salmi, Maurizio**
**00198, Rome (IT)**
• **Cantoni, Mauro**
**00196, Rome (IT)**
• **Pisacane, Fabrizio**
**00189, Rome (IT)**
• **Zuco, Giuseppe**
**00135, Rome (IT)**
• **Della Sala, Dario**
**00053, Civitavecchia (RM) (IT)**

(74) Representative: **Sarpi, Maurizio**
**Studio Ferrario di Maurizio Sarpi**
**Via Collina 36**
**00187 Roma (IT)**

(54) **Mobile radiometric multiterminal for a geographically distributed network operating in real time**

(57) A mobile radiometric multiterminal has:
a) the capacity for making measurements of radiometric interest by means of a multiplicity of individual sensors situated in fixed relative positions in a compartment shielded in regard to the radio communications;
b) a degree of mobility, even minimal in the course of its operating life, of the fixed set of individual sensors that constitute the multi-terminal in the theatre of interest;
c) the capacity for determining the space-time co-ordinates associated to said multi-terminal, referred to a reference system fixed with respect to the terrestrial globe, provided with time reference; and
d) the capacity for communicating the data acquired to a processing centre dedicated for the purpose also in differed time.

FIG. 2

EP 2 108 979 A2

## Description

The present invention relates to an apparatus that enables recovery of bituminous aggregate and recycling thereof.

The present invention relates to the sectors of safety of transport of freight and persons and of environmental monitoring, where there is required the knowledge of radiometric data updated in real time, and more in particular regards an apparatus for monitoring radiation on significant mobile loading spaces, such as on carriers for land, air, or sea transport, which are provided with shieldings that are able to prevent the functions of spatial and temporal location and of transmission via radio to a data-processing centre.

In a patent application filed on the same date and in the name of the present applicant, a radiometric device is described, **characterized in that** it is designed to be transported by a mobile carrier and in that it comprises:

> a) means designed to perform measurements of radiometric interest;
> b) means for determining the space-time co-ordinates associated to the device itself referred to a reference system that is fixed with respect to the terrestrial globe and is provided with time reference; and
> c) means for communicating the radiometric data acquired and the corresponding space and time references to a processing centre dedicated for said purpose.

The above means that, once the device has been installed on a moving vehicle, it is able to supply, in the course of its operating life, to said processing centre, radiometric data describing the radiation field interacting with the radiometric device itself in all the geographical positions occupied thereby during the acquisition time. Consequently, it is particularly indicated for the creation of radiometric maps of vast territories, as likewise for monitoring geographical areas from the standpoint of the environmental background and for monitoring any particulate matter present in air that is collected by moving means.

From the experiments conducted it has, however, been found that a terminal of this type is certainly unsuitable in all those cases in which there is the need to distribute different measuring points over a vast area, which is also moving. Consider, for example, the hold of a ship to be loaded with freight, the hold of a ferry boat, an underground train, the fuselage of an aeroplane, a railway train, the luggage compartment of a line bus, and so forth. Given the significant loading spaces to be surveyed, a single sensor would be insufficient, and it would be necessary to resort to a plurality of radiometric sensors located in fixed spatial positions with respect to the walls that define the loading space of the vehicle under examination so as to be able to measure the fields of radiation present in the respective positions.

Consequently, a first purpose of the present invention is to provide a transportable apparatus that is able to detect and transmit to a remote centre substantially in real time the data regarding possible ionizing and non-ionizing radiation present within an environment not susceptible to radio connection with regard to the outside world and confined on a moving means.

A second purpose of the present invention is to provide a transportable apparatus of the type referred to above which will enable management of a multiplicity of radiometric sensors installed on board a generic vehicle or train of vehicles in a way fixed with respect to the vehicle or vehicles using just one location-transmission module that performs its functions for the entire vehicle or train of vehicles.

Said purposes have been achieved according to the invention by envisaging a transportable apparatus in which, in conditions of radio obscuration, the functions of the terminal linked to the radio transmissions are distributed over a location and transmission module that is located on the outside of the shielding, whilst the loading space of interest is explored within the shielding itself using a system that is rigid and fixed with respect to the moving means of appropriately distributed radiometric sensors that transmit the data detected to a collection and storage module, which is in turn connected via cable with said external location and transmission module.

In the case where the means on which the apparatus is installed comes to find itself in a radio-obscured zone, it keeps a memory of the data on board the concentrator module until it is possible to set up the connection with the receiving station.

More in particular, according to a preferred embodiment, the apparatus of the present invention is made up of:

- a plurality of N radiometric devices or sensors (N ≥ 2), located in fixed spatial positions with respect to the walls that define the loading space under examination, the measurements made by said sensors consequently characterizing the radiation fields present in the respective positions;
- a data-concentrator module, which is located once again within the loading space under examination and is provided with memory and bidirectional-communication capacity, via cable or else via radio, towards the individual radiometric measurement devices or sensors, said module carrying out collection and storage of the results of the measurements and moreover having bidirectional-communication capacities, this time via cable, towards a location and transmission module that is placed on the outside of the shielding;
- the aforementioned location and transmission module, which is able to determine the space-time coordinates associated thereto and referred to a reference system fixed with respect to the terrestrial globe and likewise has the capacity for transmitting the radiometric and space-time data to a remote processing centre dedicated to this purpose;

- one or more modules for electrical, electrochemical, or photovoltaic supply, or the like, according to the modalities of intermodular connection defined above.

The apparatus forming the subject of the invention is devised in such a way as to enable, in association with a plurality of mobile apparatuses of a similar type, the creation of a network of devices for measuring radiometric quantities that operate in real time within a chosen geographical area, which is explored dynamically by a set of georeferenced mobile apparatuses, the modality of exploration being established by the nature of the carriers that house the apparatuses themselves and by their autonomous and independent logic of displacement.

On the basis of what has been said above, it may be stated that each apparatus, under which N devices come, supplies an N-tuple of radiometric data, each of which describes the response of a single sensor as a function of the scalar flow of radiation existing along the path traversed by the sensor itself in unit time and as a function of the likelihood of absorption of the radiation by the sensor.

What has been stated maintains a physical and operative meaning not only with the apparatus moving but also in the case where it is stationary.

For the response of the single device (e.g., for a scintillator) along the path $C$, in stationary conditions and as a function of the energy of the radiation, we can write:

$$R_{(E,C)} = \int_C P_{(E)} \Phi_{(E,x,y,z)} dE \ dx \ dy \ dz$$

where:

E is the energy of the radiation,
C is the path traversed in unit time.

In general, the radiation field is constituted by an *environmental background component,* which is a function both of the path traversed by the radiometric sensor and of the spatial distribution of the radiation sources present in the surrounding space, and by a *vehicle component* depending upon the intrinsic contribution of the carrier, upon what derives from possible radio-emitting sources housed on the carrier itself during the acquisition time, and possibly upon what can be attributed to contamination of the carrier deriving from passage through a contaminating scenario. The first component may also be defined as *fluctuating,* whilst the second may be considered *constant* since, in the course of the acquisition time, the relative position of the terminal with respect to the transported source does not vary and, realistically, the contribution from possible contamination collected can be assumed as linearly increasing over time but with a very small angular coefficient (at least until said contamination is removed, for example following upon atmospheric events, on account of human intervention, etc.).

The individual modules constituting the apparatus that forms the subject of the invention are of different types and characteristics according to the specific radiometric requirements envisaged for the apparatus itself, according to the technologies of location available, and according to the remote-communication modalities available and practicable in the territory of interest. Finally, corresponding to the temporal operating modes envisaged is the choice of the appropriate electrical supply.

Further characteristics and advantages of the invention will emerge clearly from the ensuing detailed description with reference to the attached plates of drawings, which illustrate a preferred embodiment thereof purely by way of non-limiting example. In the plates of drawings:

Figure 1 is a functional diagram of the apparatus; and
Figure 2 shows an example of use of the apparatus.

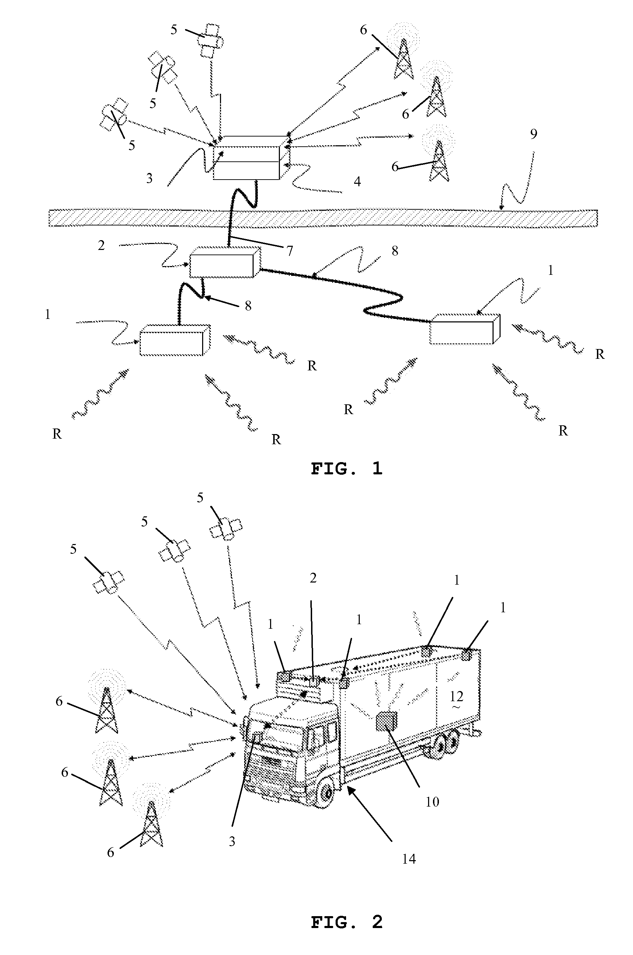

With reference to Figure 1, said apparatus substantially comprises the elements listed in what follows.

A) A plurality of N modules 1, with (N ≥ 2), of radiometric measurement for ionizing and non-ionizing radiation, which are located in mutually fixed spatial positions and the measurements made by said modules consequently characterize the radiation fields present in the respective positions. In greater detail, each module 1 is constituted, according to the requirements, by at least one device for monitoring alpha, and/or beta, and/or X, and/or gamma, and/or neutron radiation. In Figure 1, designated by R is generic radiation interacting with the respective radiometric modules. In principle, these are devices having dimensions and encumbrance compatible with the characteristics of the carriers that house them on board and carry them in the area of interest. Said devices are able to make measurements regarding the radiation field existing within the carrier and in the external environment, or else also in particular media, such as, by way of non-exhaustive example, air, water, suspended dust, etc., using technologies and interfacing systems of a known type (by way of non-exhaustive example, voltage, current, or pulse interfacing systems, in EIA-RS232, RS485 mode, etc.).

Each of the modules 1 can be constituted in particular by one or more miniaturized or sub-miniaturized devices, such as the ones that form the subject of the patent application No. IT RM2005A000204, filed on April 29, 2005, entitled *"Rivelatore a scintillazione sub-miniaturizzato"* (*"Sub-miniaturized scintillation detector"*), and/or by at least one omnidirectional detection device, as described in the patent application No. IT RM2006A000585, filed on October 27, 2006, entitled *"Rivelatore a scintillazione omnidirezionale e metodo per la localizzazione spaziale di sorgenti radioattive"* (*"Omnidirectional scintillation device and method for the spatial location of radioactive sources"*).

B) A data-concentrator module 2, provided with memory and having capacities of bidirectional communication, via cable 8 or else via radio, towards the individual radiometric devices 1. It collects and stores the results of the measurements and has capacities of bidirectional communication, via cable 7, towards a satellite-location and transmission module 3.

C) A location and transmission module 3, having capacities for determining the space-time co-ordinates associated thereto and referred to a reference system fixed with respect to the terrestrial globe. It likewise has a capacity for transmitting the radiometric and space-time data to a remote processing centre (not illustrated) dedicated for the purpose. The location section of said module (we shall limit our description by way of non-exhaustive example to the satellite methodology; in the figures, the location satellites are designated as a whole by the reference number 5) is constituted by GNSS (Global Navigation Satellite Systems) receivers that make available the signals indispensable for associating to the radiometric measurements the necessary absolute references of a temporal and spatial type, as described in the European patent application No. EP1431946, dated June 23, 2004, entitled "*Communications device for motor vehicles for receiving selective information transmitted by a service center*". The transmission section of the present module operates in bidirectional mode with a radio-communication system, which is designated in Figure 1 by the reference number 6 and is based, by way of non-exhaustive example of the possibilities, on GSM, GPRS, UMTS technology. The results of the measurements are appropriately returned in digital form, associated biuniquely to the sensors 1 distributed spatially and georeferenced, before being transmitted in selective or cumulative mode to at least one remote receiving station.

D) One or more modules 4 for electrical, electrochemical, photovoltaic supply or the like according to the intermodular connection modes defined above. Said module or modules must respond not only to the normal criteria of sizing but also to the particular uses that are required of the apparatuses. Here, it is intended to specify and comprise, by way of non-exhaustive example of the possible cases, the following:

(a) the devices supplied by sources provided on board the carriers;
(b) the devices supplied by sources recharged via the sources provided on board the carriers;
(c) the devices supplied by non-rechargeable sources, which enable operation for a limited time (disposable devices); and
(d) the devices supplied by sources that can be recharged through external sources available in the operating environment.

Illustrated by way of example in Figure 2 is an example of use of the apparatus forming the subject of the invention on an international-transport vehicle. Designated by 10 is a source of radiation transported in the loading compartment 12 of an international-transport vehicle 14. A plurality of radiometric measuring devices 1 are located in fixed spatial positions with respect to the walls that define the loading space under examination and that exert a shielding action in regard to the radio transmissions. Said radiometric measuring devices 1 measure the radiation fields present in the respective positions and send, via cable or radio, inside the loading compartment 12, the data gathered to a concentrator module 2. The latter is provided with capacity for bidirectional communication, thanks to a cable 7 passing through the shielding wall 9, towards a location and transmission module 3, which is installed outside the loading compartment and is designed to transmit via radio the radiometric data received and the space-time reference data associated thereto to a remote processing centre dedicated for the purpose.

Considering the radiometric characteristic of the apparatus and the mobility of the carriers on board which it is carried within areas of interest, four advantageous fields of application can be identified, which concern the safety of transport of freight and of persons and environmental monitoring and are based precisely on the knowledge of the radiometric data:

1. surveillance of freight transported by land, air, or else sea carriers;
2. surveillance of luggage accompanying persons transported by the carriers referred to above;
3. monitoring of geographical areas from the standpoint of the environmental background;
4. monitoring of particulate matter in the air that is collected by the moving means.

With reference to the apparatus forming the subject of the present invention, the following advantages may be highlighted:

1. The apparatuses do not require local intervention of operators in so far as they are autonomous and controlled in bidirectional mode by a purposely provided remote data-processing centre;

2. A very high number of individual radiometric measuring devices can be connected to just one locator-concentrator module for the surveillance of an environment that is not susceptible to radio connection towards the outside or else is provided with a multiplicity of measuring systems that can move with respect to a reference system fixed with respect to the terrestrial globe remaining at fixed distances from one another;

3. An in practice unlimited number of radiometric apparatuses can be added to the telematic network, which can hence increase or decrease in a dynamic way over time;

4. The type of radiation that can be measured by the individual radiometric devices installed for each apparatus is not fixed beforehand and this enables connection of measuring devices for ionizing and non-ionizing radiation of any type;

5. Unlike the portal radiometric systems, which operate during forced crossing of a barrier, for example by a transport vehicle at a national frontier or border, the apparatuses forming the subject of the present invention are able to carry out radiometric detection throughout the entire duration of transport, with a considerable reduction in the minimum detectable amounts;

6. The means of transport provided with radiometric apparatuses according to the invention are not forced to follow obligate paths or else to make special stops, a fact that can in practice lead to a reduction in the frequency of the radiometric checks to facilitate mobility of freight and/or persons; the detections are in fact made with the carrier moving;

7. Possible situations of alert can be effectively managed since not only the radiometric data that verify pre-set conditions of alarm but also the data regarding spatial tracking of the radiometric apparatus described are available in real time;

8. It is possible to provide and manage a real-time mapping of the territory, also for purely statistical reasons (and not only in case of emergency), accumulating historic series of detections made by a plurality of apparatuses according to the invention;

9. It is possible to carry out monitoring of geographical areas that are potentially at risk, such as for example ones adjacent to nuclear power stations or sites for storage of nuclear waste;

10. It is possible to carry out monitoring of geographical areas by means of mobile stations in locations close to situations of potential risk (e.g., special transport of radioactive freight, nuclear waste, areas neighbouring on frontiers at risk, etc.).

Described so far herein is a preferred embodiment of the invention. It is on the other hand evident that numerous variations and modifications can be made by a person skilled in the branch to the device described in order to adapt it to the different operating requirements, without this implying any departure from the sphere of protection of the present industrial patent right, as defined in the ensuing claims.

## Claims

1. An apparatus for monitoring radiation in a loading space to be controlled, confined within any land, air or sea transport carrier, said loading space being surrounded by shieldings (9) that are able to prevent the functions of location and transmission via radio, said apparatus being **characterized in that** it comprises in combination:

- a plurality of N (with N ≥ 2) radiometric devices or sensors (1), which are located within the loading space (12) to be controlled, in fixed spatial positions with respect to the walls that define said loading space, and are designed to measure the radiation fields present in the respective positions;

- a data-concentrator module (2), located once again within the loading space to be controlled, which is provided with memory and bidirectional-communication capacity, via cable or else via radio, towards the individual radiometric measurement devices or sensors (1) and is designed to perform the collection and storage of the results of the measurements; said concentrator module (2) moreover having capacities of bidirectional communication via cable (7) towards a location and transmission module (3) that is placed outside the shielding (9); said location and transmission module (3) comprising: means designed to:

determine the space-time co-ordinates associated thereto and referred to a reference system (5) fixed with respect to the terrestrial globe; and
transmit the radiometric and space-time data associated thereto to a remote processing centre dedicated for the purpose via a land communication network (6); and
one or more modules (4) for electrical, electrochemical, photovoltaic supply or the like, according to the modalities of intermodular connection established,
thereby obtaining that said apparatus is able to detect and transmit via radio to a remote centre in real time the results of the measurements of the data on possible radiation detected within said loading space to be controlled when the carrier on which it is installed is moving, together with the space-time data associated thereto, in all the geographical positions occupied by said carrier.

2. The apparatus for monitoring radiation as per the preceding claim, **characterized in that,** when it is about to occupy a radio-obscured zone, the concentrator module is designed to keep in memory the data that are detected by the individual radiometric devices until it is possible to re-establish the connection via radio with the receiving station.

3. The apparatus for monitoring radiation as per the preceding claims, **characterized in that** the radiometric devices (1) comprise at least one device for monitoring alpha, and/or beta, and/or X, and/or gamma, and/or neutron radiation.

4. The apparatus for monitoring radiation as per the preceding claims, **characterized in that** the dimensions and encumbrance of said devices (1) are compatible with the characteristics of the carriers that house them on board and carry them in the area of interest; said devices being designed for making measurements regarding the radiation field existing within the carrier and also depending upon the field present in the external environment, and/or designed for making measurements also in particular media, such as air, water, suspended dust, and the like.

5. The apparatus for monitoring radiation as per Claim 1, **characterized in that** the location section of the location and transmission module (3) is constituted by GNSS (Global Navigation Satellite Systems) receivers that make available the signals indispensable for associating to the radiometric measurements the necessary absolute references of a temporal and spatial type.

6. The apparatus for monitoring radiation as per Claim 1, **characterized in that** the transmission section of the location and transmission module (3) operates in bidirectional mode with a radio-communication system based upon GSM, GPRS, UMTS technology; the results of the measurements being appropriately returned in digital form, associated biuniquely to the spatially distributed sensors (1), georeferenced and associated to the temporal information, before being transmitted in selective or cumulative mode to at least one remote receiving station.

7. The apparatus for monitoring radiation as per the preceding claims, **characterized in that,** in association with a plurality of mobile apparatuses of a similar type, it is designed to enable creation of a network of devices for measuring radiometric quantities that operate in real time within a chosen geographical area, which is explored dynamically by a set of georeferenced mobile apparatuses.

8. A geographically distributed network for surveillance of radiometric quantities, comprising:

   - a plurality of apparatuses for monitoring radiation according to Claim 1, each of which surveys, through a plurality of radiometric measuring devices, an environment that is not susceptible to radio connection towards the outside and moves with respect to a reference system fixed with respect to the terrestrial globe; and
   - a remote processing centre, configured for communicating with said mobile apparatuses for monitoring radiation and receiving in real time the radiometric data describing the radiation field interacting with each of said mobile apparatuses in all the geographical positions occupied by said mobile apparatuses during the acquisition time.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT RM20050204 A
- IT RM20060585 A

- EP 1431946 A